# EUROPEAN PATENT SPECIFICATION

(11) **EP 4 231 553 B1**
(45) Date of publication and mention of the grant of the patent: **18.11.2026**
(21) Application number: 21890591.7
(22) Date of filing: 27.05.2021
(51) Int. Cl.: G06N 3/006, H04L 61/4511

(54) **MESSAGE ROUTING AND FORWARDING METHOD CHANGING DESTINATION ADDRESS USING ASSOCIATED CHANNEL**
NACHRICHTENROUTING- UND -WEITERLEITUNGSVERFAHREN MIT ÄNDERUNG DER ZIELADRESSE UNTER VERWENDUNG EINES ASSOZIIERTEN KANALS
PROCÉDÉ DE ROUTAGE ET D'ACHEMINEMENT DE MESSAGE CHANGEANT L'ADRESSE DE DESTINATION À L'AIDE D'UN CANAL ASSOCIÉ

(30) Priority: 12.11.2020 CN 202011259838; 16.03.2021 CN 202110281708
(43) Date of publication of application: 23.08.2023
(73) Proprietor: Institute of Acoustics, Chinese Academy of Sciences, Haidian District Beijing 100190 (CN)
(72) Inventor: WANG, Jinlin, Beijing 100190 (CN); YOU, Jiali, Beijing 100190 (CN); CHENG, Gang, Beijing 100190 (CN); SUN, Peng, Beijing 100190 (CN)
(74) Representative: Keilitz & Partner Patentanwälte PartGmbB
(86) International application number: PCT/CN2021/096321
(87) International publication number: WO 2022/100060

(56) References cited:
- WO-A1-2018/183553
- CN-A- 105 471 747
- CN-A- 110 636 001
- CN-A- 111 555 982
- SWETA JAISWAL KARTHIKEYAN A JAMSHEEED M P SIVA SABAREESH D MADHAN RAJ K: "EDX - Edge Exchanger draft-edx-edge-exchanger-00; draft-edx-edge-exchanger-01.txt", no. 1, 4 December 2019 (2019-12-04), pages 1 - 10, XP015136845, Retrieved from the Internet <URL:https://tools.ietf.org/html/draft-edx-edge-exchanger-01> [retrieved on 20191204]

## Description

### Cross-reference to Related Applications

This application claims priority to Chinese Patent Application No. 2020112598384 filed on November 12, 2020 and priority to Chinese Patent Application No. 2021102817089 filed on March 16, 2021.

### Technical Field

The present invention belongs to the technical field of computer networks, and specifically relates to an on-path re-addressing based routing and forwarding method.

### Background

In the message routing and forwarding method of traditional networks, after a path is calculated through a routing algorithm, the path cannot be dynamically modified in the subsequent forwarding process, however, the network state is always changing, the path proper at the previous moment may have been congested at the next moment, and the path cannot be adjusted and bypassed in time through the current method, which often leads to a significant degradation in service performance.

Along with the development of SDN, a control plane is separated from a data plane, such that the network state may be perceived and controlled more flexibly, and the ability of network perception is gradually improved. At the same time, such scenarios as mobile communication, efficient distribution of contents and multi-host network transmission bring the processing requirements of multiple addresses and variable addresses in the message transmission process, and how to make the message change the address dynamically in the forwarding process so as to change the transmission path is a crucial problem.

The publication of SWETA JAISWAL KARTHIKEYAN A JAMSHEEED M P SIVA SABAREESH D MADHAN RAJ K: "EDX - Edge Exchanger draft-edx-edgeexchanger-00; draft-edx-edge-exchanger-01.txt", IETF; no. 1 4 December 2019 (2019-12-04), pages 1-10, XP015136845, discloses that a terminal can send a DNS query and get as a reply a list of servers to further send a given message, wherein the list of server provides the geographic coordinates and latency of the servers listed in the reply which allows the requesting device to determine the best (according to the requesting device criteria) server to forward its message. The processing time and performance of this system, however, can still be improved.

### Summary of the Invention

To solve the above shortcomings of the prior art, the present invention provides an on-path re-addressing based routing and forwarding method, to improve the performance of network transmission, and timely respond to the perceived network state.

The invention is defined by the independent claims. Further embodiments of the invention are defined by the dependent claims. The present invention has the following beneficial effects compared with the prior art:
through the method of the present invention, the routing and forwarding process may be timely optimized and adjusted through the state information perceived by the network, and a proper forwarding route is selected for each hop through field selection and calculation of the forwarding path, to improve the overall routing and forwarding performance of the network.

### Brief Description of the Drawings

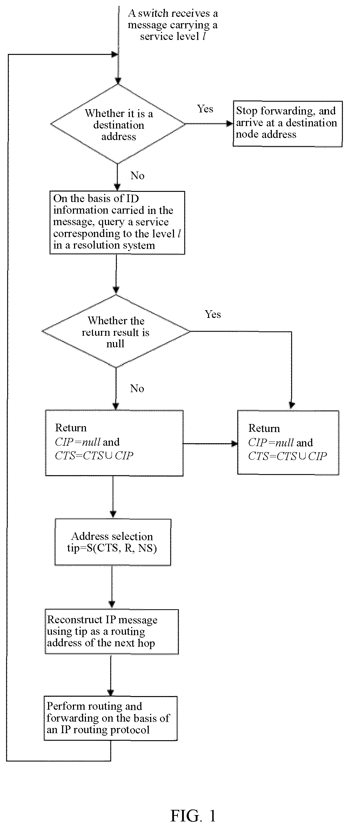

FIG. 1 is a flow chart of an on-path re-addressing based routing and forwarding method.

### Detailed Description of Embodiments

The present invention will be further described now with reference to the accompanying drawings.

As shown in FIG. 1, the present invention provides an on-path re-addressing based routing and forwarding method, and in a network using the on-path re-addressing based routing and forwarding method, the method is specifically as follows:
(1) identifying each network element entity by means of a unique and invariable identifier ID, wherein all the network element entities in the network include but are not limited to hosts, devices, data and services, and the mapping relationship between the identifier ID of each network element entity and a corresponding network address is maintained by a service level-based resolution service system;
   wherein the service level refers to differentiated service defined based on measurement, and the definition is based on the combination of a service level defined based on response delay of network measurement and a service level defined based on geographic distance measurement.
(2) the above service level-based resolution service system is characterized as follows:
   the resolution service system includes one or more service levels, and is a distributed query service system which can maintain the mapping relationship between the identifier ID and a corresponding network address and which can provide resolution services of multiple service levels;
   wherein the service level refers to differentiated service defined based on measurement, and the definition is based on the combination of a service level defined based on response delay of network measurement and a service level defined based on geographic distance,;
   the mapping relationships between all the ID identifications and the corresponding network addresses are registered and managed in the resolution service system. The resolution service system includes but is not limited to capabilities in registration, retrieval, management and query services.

The resolution service system is a distributed resolution system with a hierarchical structure based on service levels, and can be a single-layered structure or a multi-layered structure; and
nodes at the same level have the same service level, while nodes at different levels have different service levels.

A service node of a certain service level can provide service to a user, indicating that the corresponding relationship between the identifier ID of the user and the network address can be queried on the service node according to the service performance corresponding to the service level.

Each distributed node constituting the system maintains one or more neighborhood node lists and nodes in the one or more neighborhood node lists can cooperatively respond to the same resolution request;
herein, the neighborhood node list is a locally autonomous node list maintained by the node itself, and the node selects service nodes in part of the network based on neighborhood judgment criteria to construct a neighborhood node list;
multiple neighborhood node lists can be established if multiple criteria are passed.

Wherein the neighborhood judgment criteria include but are not limited to:
a neighborhood is established based on a network delay measurement criterion, if the delay between a node and a candidate neighborhood node is less than a certain threshold, then the candidate neighborhood node is added to the neighborhood node list;
a neighborhood is established based on a geographical distance criterion, if the physical distance between a node and a candidate neighborhood node is less than a preset distance threshold, the candidate neighborhood node is added to the neighborhood node list;
a neighborhood is established based on a semantic similarity criterion, if the node is highly associated with the content stored in the candidate neighborhood node, then the candidate neighborhood node is added to the neighborhood node list; wherein the correlation refers to similarity of the contents stored in two nodes through semantic calculation; and
a neighborhood is established based on a structural relation criterion, if all the service nodes constitute a tree-shaped structure, then descendant nodes or descendant's descendant nodes in the tree-shaped structure constitute a neighborhood.

In addition, the nodes in one or more neighborhood node lists cooperatively respond to the same resolution request; and nodes in the neighborhood node list maintained by each node can provide services in place of the node itself or in parallel with the node;
wherein conditions for judging replaceable or parallel services include but are not limited to:
I. the node itself is overloaded and is difficult to respond to the request under the requirements of the service level, and the neighborhood nodes with the same service capability can provide the request with service meeting the level requirements;
II. the node itself does not store the required content, and the related neighborhood nodes have the required content and can provide the service of the service level required by the user; and
III. when high concurrent requests occur, multiple neighborhood nodes can meet the service requirements at the same time, and can perform request diversion.

One user node possesses one or more serviceable nodes belonging to the same service level, if multiple serviceable nodes exist in a certain service level, then the service level has and only has one service node as a master node;
wherein all the master nodes of each service level serving the user conform to a nested structure, all the users possessed by the user at master node at the service level j may also be the users possessed by the user at master node at levels higher than the service level j;
suppose that the user is *uᵢ, ms_{i,j}* is the master node selected for *uᵢ* at the service level j, *Φ*(*ms_{i,j}*) is a user set served by *ms*_{*i*,*j*} of the master node, when the service level k is greater than the service level j, *Φ*(*ms_{i,j}*) ⊂ *Φ*(*ms_{i,k}*);
wherein the master node is defined or assigned by a selection function.

The data message is forwarded in a network layer message format, and the data message includes: a network address (NA) field, a network address extension (NA extension) field, an ID identification field which is unchanged during a session, and a preference field which carries application requirements for transmission; wherein the preference field includes application-related specific parameters; and the application-related specific parameters include, but are not limited to, service quality requirements and application preferences.

Wherein, the NA field and the NA extension field may be dynamically rewritten in the routing and forwarding process.

(3) after a network routing and switching device receives a data message, rewriting NA field and the NA extension field of the message;
wherein specific process of rewriting the NA field and the NA extension field includes:
step 1) requesting the resolution service conforming to the response service level requirement from the resolution service system according to the ID identification carried by the data message, obtaining a new destination address under the ID identification, and rewriting the NA field of the data message using the new destination address to obtain rewritten NA field;
step 2) obtaining a candidate address set through the candidate address set information or its reference information in the NA extension field base on the network state perceived by the network routing and switching device and the network address and the network address extension field information possibly carried in the data message;
in the candidate address set which is constituted by the addresses queried from the resolution service system according to the ID identification, selecting part of the subset, reordering the selected addresses, selecting a proper address as a new destination address according to preset strategies, filling the new address destination into the NA field of the data message, screening part of the selected subset, and writing the screened content back to the corresponding position in the NA extension field; and
step 3) calculating part of the field information in the new NA extension field according to the network state perceived by the network routing and switching device the NA extension field information possibly carried in the data message and preset strategies; then, rewriting the corresponding part of the NA extension field in the data message, and obtaining the rewritten NA extension field.

Wherein the information of the NA extension field includes but is not limited to: multiple candidate storage address set information or reference information of the content corresponding to the destination ID, multiple candidate network address set information or reference information under the same device ID, and network layer processing indication information; wherein the reference information includes, but is not limited to, pointers and offsets.

(4) The network routing and switching device forms a forwarded message through message reconstruction based on the NA field and the NA extension field of the rewritten message, and forwards based on a forwarding table of the new destination address. The forwarding table may be calculated and maintained using a location-based routing method, e.g., IP protocol.

Specifically, message reconstruction is to reconstruct the rewritten NA field or NA extension field into the message format supported by the current network and forward according to the forwarding table of the new destination address.

### Embodiment 1

All the network element entities in the network include hosts, devices, data and services, and are identified by unique and invariant identifier ID and routed by IP as a network address.

The resolution service system maintains the mapping relationship between the ID identification of the network element entity and the corresponding network address (i.e., IP address); wherein, the resolution service system provides services with differentiated delay, different delay ranges obtained through network measurement are different service levels, and the resolution service system provides resolution services with the resolution delay in different service levels of *d₁*ms, *d₂*ms, *d₃*ms......

The data message is forwarded in the form of network layer message. The data message includes source address s, destination address *ts,* ID identification field *id* and candidate address set information *CTS= {ts₁, ts₂* ...*}*, wherein CTS is null at the beginning. The data message also carries application requirement information containing application-related specific parameters *R= {r₁, r₂...},* and the related specific parameters include, but are not limited to, service quality requirement and application preferences. Wherein the network routing and switching device is a switch; and the steps of address rewriting and forwarding in its transmission process are shown in FIG. 1:
1) During each forwarding, first check whether the current node address is the destination address of message forwarding, if so, stop forwarding, if not, the switch performs resolution query on the id carried in the data message through the resolution service system, the switch sends out a resolution query request to the service node corresponding to the *l* service level in the resolution service system according to the requirement of the message resolution service level *l* received by the switch, the resolution service node should return results within the service performance requirement range of the *l* service level, and the return result may possibly be null (i.e., CIP=null) or an IP address set, i.e., the candidate address set CIP= {cip1, cip2... cipn}; where n > = 1.
2) After receiving the returned candidate address set CIP, the switch adds the CIP into the candidate address field CTS to obtain the changed candidate address set CTS', i.e., CTS'=CTS U CIP, and the address is selected according to the selection function,$tip = S \left(CTS',R,NS\right)$
   Where, S(X, Y, Z) is a selection function, X value is the modified candidate node set CTS', Y value is the parameter set R, and Z value is the network state information set NS, such as a port load, a link bandwidth, etc.;
   tip is the finally selected ip address that meets the requirements of the selection function, and serves as the forwarding address of the next hop, that is, the new destination address. Wherein S(X, Y, Z) is the address corresponding to the minimum port load selected as the address of the next hop;
   the candidate node list is calculated: CTS1=DEL(CTS,R,NS),

Wherein DEL (X, Y, Z) is a candidate address list clipping function, and the clipping function can be defined according to service requirements.

If the corresponding candidate address whose port load exceeds the threshold needs to be trimmed, the nodes that do not meet the performance requirements will be deleted from the modified candidate address set CTS', and then the trimmed candidate node list will be used instead of the previous list.

Wherein DEL (X, Y, Z) is to delete all candidate nodes whose port load is greater than the threshold THL.

3) reconstructing the new IP data message with the message format supported by the current network through the newly selected destination address, the previous source address s and ID identification *id,* and the modified candidate address set CTS', and the message is forwarded according to a forwarding table of the new destination address through the IP routing and forwarding mechanism and based on the IP routing protocol.

4) the above process is continuously performed until reaching the destination address *ts.*

Finally, it should be noted that the above embodiments are merely intended to illustrate rather than limiting technical solutions of the present invention.

## Claims

1. An on-path re-addressing based routing and forwarding method, comprising:
in a network using the on-path re-addressing based routing and forwarding method,
identifying each network element entity by means of a unique and invariable identifier ID, wherein all the network element entities in the network include but are not limited to hosts, devices, data and services, and the mapping relationship between the identifier ID of each network element entity and a corresponding network address is maintained by a service level-based resolution service system;
wherein the service level refers to differentiated service defined based on measurement, and the definition is based on the combination of a service level defined based on response delay of network measurement and a service level defined based on geographic distance measurement;
after a network routing and switching device receives a network layer data message, rewriting a network address field and network address extension field of the message; and forming a forwarding message by means of message reconstruction according to the rewritten message network address field and network address extension field, and forwarding the forwarding message on the basis of a forwarding table, wherein the forwarding table can be calculated and maintained by using a location-based routing method;
wherein the data message is forwarded in a network layer message format, and the data message comprises: a network address field, a network address extension field, an ID identification field which is unchanged during a session, and a preference field which carries application requirements for transmission; wherein the preference field comprises: application-related specific parameters; the application-related specific parameters include, but are not limited to, service quality requirements and application preferences;
rewriting the network address field and the network address extension field of the data message, as well as reconstructing the message, wherein the specific process of rewriting the network address field and the network address extension field of the data message is as follows:
step 1) requesting a resolution service conforming to the response service level requirement from the resolution service system according to the ID identification carried by the data message; obtaining a new destination address under the ID identification, and rewriting the network address field of the data message using the new destination address to obtain a rewritten network address field;
step 2) obtaining a candidate address set through the candidate address set information or its reference information in the network address extension field, with considering the network state perceived by the network routing and switching device and the network address extension field information carried in the data message;
in the candidate address set which is constituted by the addresses queried from the resolution service system according to the ID identification, selecting part of the subset, reordering the selected addresses, selecting a proper address as a new destination address according to preset strategies, filling the new destination address into the network address field of the data message, screening part of the selected subset, and writing the screened content back to the corresponding position in the network address extension field; and
step 3) calculating part of the field information in the new network address extension field according to the network state perceived by the network routing and switching device, the network address extension field information possibly carried in the data message and preset strategies; then, rewriting the corresponding part of the network address extension field in the data message, and obtaining the rewritten network address extension field;
wherein a specific process of reconstructing the message is as follows:
reconstructing the message of the rewritten network address field and the rewritten network address extension field into a message format supported by the current network, and forwarding a message according to a forwarding table of the new destination address.

2. The on-path re-addressing based routing and forwarding method of claim 1, wherein the resolution service system comprises one or more service levels, and is a distributed query service system which can maintain the mapping relationship between the identifier ID and a corresponding network address and which can provide resolution services of multiple service levels;
the resolution service system is a service level-based distributed system with a hierarchical structure; each distributed node constituting the distributed system maintains one or more neighborhood node lists, and the nodes in the one or more neighborhood node lists cooperatively respond to the same resolution request;
the mapping relationships between the identifications of all the identifiers ID and the corresponding network addresses are registered and managed in the resolution service system; and
wherein the resolution service system includes but is not limited to a registration service capability, a retrieval service capability, a query service capability and a management service capability.

3. The on-path re-addressing based routing and forwarding method of claim 1, wherein the service level-based distributed system with a hierarchical structure is of a single-layered structure or a multi-layered structure;
nodes at the same level in the distributed system have the same service level, while nodes at different levels have different service levels;
a serviceable node of a user on a certain service level indicates that the user can obtain resolution and query services on the service node according to the service performance corresponding to the service level; and
one service node possessing a certain user indicates that the service node can provide the resolution and query services to the user with the service performance corresponding to the service level.

4. The on-path re-addressing based routing and forwarding method of claim 1 or 3, wherein in the service level-based distributed system with a hierarchical structure, one user node possesses one or more serviceable nodes belonging to the same service level, if multiple serviceable nodes exist in a certain service level, then the service level has and only has one service node as a master node;
wherein all the master nodes of each service level serving the user conform to a nested structure, all the users possessed by the user at master node at the service level j must also be the users possessed by the user at master node at levels higher than the service level j;
suppose that the user is *uᵢ, ms_{i,j}* is the master node selected for *uᵢ* at the service level j, *Φ*(*ms_{i,j}*) is a user set served by *ms_{i,j}* of the master node, when the service level k is greater than the service level j, *Φ*(*ms_{i,j}*) ⊂ *Φ*(*ms_{i,k}*);
wherein the master node is defined or assigned by a selection function.

5. The on-path re-addressing based routing and forwarding method of claim 1, wherein the neighborhood node list is a locally autonomous node list maintained by the node itself, and the node selects service nodes in part of the network based on neighborhood judgment criteria to construct a neighborhood node list;
multiple neighborhood node lists can be established if multiple criteria are passed;
wherein the neighborhood judgment criteria include but are not limited to:
a neighborhood is established based on a network delay measurement criterion, if the delay between a node and a candidate neighborhood node is less than a certain threshold, then the candidate neighborhood node is added to the neighborhood node list;
a neighborhood is established based on a geographical distance criterion, if the physical distance between a node and a candidate neighborhood node is less than a preset distance threshold, the candidate neighborhood node is added to the neighborhood node list;
a neighborhood is established based on a semantic similarity criterion, if the node is highly associated with the content stored in the candidate neighborhood node, then the candidate neighborhood node is added to the neighborhood node list; wherein the correlation refers to similarity of the contents stored in two nodes through semantic calculation; and
a neighborhood is established based on a structural relation criterion, if all the service nodes constitute a tree-shaped structure, then descendant nodes or descendant's descendant nodes in the tree-shaped structure constitute a neighborhood.

6. The on-path re-addressing based routing and forwarding method of claim 1, wherein the nodes in one or more neighborhood node lists cooperatively respond to the same resolution request; and nodes in the neighborhood node list maintained by each node can provide services in place of the node itself or in parallel with the node;
wherein conditions for judging replaceable or parallel services include but are not limited to:
the node itself is overloaded and is difficult to respond to the request under the requirements of the service level, and the neighborhood nodes with the same service capability can provide the request with service meeting the level requirements;
the node itself does not store the required content, and the related neighborhood nodes have the required content and can provide the service of the service level required by the user; and
when high concurrent requests occur, multiple neighborhood nodes can meet the service requirements at the same time, and can perform request diversion.

7. The on-path re-addressing based routing and forwarding method of claim 1, wherein the information of the network address extension field comprises but is not limited to: multiple candidate storage address set information or reference information of the content corresponding to the destination ID identification, multiple candidate network address set information or reference information under the same device ID identification, and network layer processing indication information; wherein the reference information includes, but is not limited to, pointers and offsets.

## Patentansprüche

1. Ein auf On-Path-Readressierung basierendes Routing- und Weiterleitungsverfahren, umfassend:
in einem Netzwerk, das das auf der On-Path-Readressierung basierende Routing- und Weiterleitungsverfahren verwendet,
das Identifizieren jeder Netzwerkelement-Entität mittels einer eindeutigen und unveränderlichen Kennung ID, wobei alle Netzwerkelement-Entitäten im Netzwerk unter anderem Hosts, Geräte, Daten und Dienste umfassen und die Zuordnungsbeziehung zwischen der Kennung ID jeder Netzwerkelement-Entität und einer entsprechenden Netzwerkadresse durch ein auf dem Servicelevel basierendes Auflösungssystem verwaltet wird;
wobei sich der Dienstgrad auf einen differenzierten Dienst bezieht, der auf der Grundlage von Messungen definiert ist, und die Definition auf der Kombination eines auf der Antwortverzögerung einer Netzwerkmessung basierenden Dienstgrads und eines auf der Messung der geografischen Entfernung basierenden Dienstgrads beruht;
nachdem ein Netzwerk-Routing- und -Vermittlungsgerät eine Datennachricht der Netzwerkschicht empfangen hat, das Umschreiben eines Netzwerkadressfeldes und eines Netzwerkadresserweiterungsfeldes der Nachricht; und das Bilden einer Weiterleitungsnachricht mittels Nachrichtenrekonstruktion gemäß dem umgeschriebenen Netzwerkadressfeld und dem Netzwerkadresserweiterungsfeld der Nachricht sowie das Weiterleiten der Weiterleitungsnachricht auf der Grundlage einer Weiterleitungstabelle, wobei die Weiterleitungstabelle unter Verwendung eines standortbasierten Routing-Verfahrens berechnet und gepflegt werden kann;
wobei die Datennachricht in einem Nachrichtenformat der Netzwerkschicht weitergeleitet wird und die Datennachricht umfasst: ein Netzwerkadressfeld, ein Netzwerkadresserweiterungsfeld, ein ID-Identifikationsfeld, das während einer Sitzung unverändert bleibt, und ein Präferenzfeld, das Anwendungsanforderungen für die Übertragung enthält; wobei das Präferenzfeld umfasst: anwendungsbezogene spezifische Parameter; die anwendungsbezogenen spezifischen Parameter umfassen unter anderem Anforderungen an die Dienstqualität und Anwendungspräferenzen;
das Umschreiben des Netzwerkadressfelds und des Netzwerkadresserweiterungsfelds der Datennachricht sowie das Rekonstruieren der Nachricht, wobei der spezifische Vorgang des Umschreibens des Netzwerkadressfelds und des Netzwerkadresserweiterungsfelds der Datennachricht wie folgt abläuft:
Schritt 1) Anfordern eines Auflösungsdienstes, der der Anforderung an das Antwort-Service-Level entspricht, vom Auflösungsdienstsystem gemäß der von der Datennachricht getragenen ID-Kennung; Erhalten einer neuen Zieladresse unter der ID-Kennung und Umschreiben des Netzwerkadressfelds der Datennachricht unter Verwendung der neuen Zieladresse, um ein umgeschriebenes Netzwerkadressfeld zu erhalten;
Schritt 2) Ermitteln einer Kandidatenadressmenge anhand der Kandidatenadressmengen-Informationen oder deren Referenzinformationen im Netzwerkadresserweiterungsfeld unter Berücksichtigung des vom Netzwerk-Routing- und -Vermittlungsgerät wahrgenommenen Netzwerkzustands sowie der in der Datennachricht enthaltenen Informationen zum Netzwerkadresserweiterungsfeld;
in der Kandidatenadressmenge, die aus den gemäß der ID-Kennung vom Auflösungsdienstsystem abgefragten Adressen besteht, einen Teil der Teilmenge auswählen, die ausgewählten Adressen neu anordnen, gemäß voreingestellten Strategien eine geeignete Adresse als neue Zieladresse auswählen, die neue Zieladresse in das Netzwerkadressfeld der Datennachricht eintragen, einen Teil der ausgewählten Teilmenge filtern und den gefilterten Inhalt an die entsprechende Position im Netzwerkadresserweiterungsfeld zurückschreiben; und
Schritt 3) Berechnen eines Teils der Feldinformationen im neuen Netzwerkadressenerweiterungsfeld gemäß dem vom Netzwerk-Routing- und - Vermittlungsgerät wahrgenommenen Netzwerkzustand, den möglicherweise in der Datennachricht enthaltenen Netzwerkadressenerweiterungsfeldinformationen und voreingestellten Strategien; anschließend Umschreiben des entsprechenden Teils des Netzwerkadressenerweiterungsfeldes in der Datennachricht und Erhalten des umgeschriebenen Netzwerkadressenerweiterungsfeldes;
wobei ein spezifischer Vorgang zum Rekonstruieren der Nachricht wie folgt abläuft:
Rekonstruieren der Nachricht aus dem umgeschriebenen Netzwerkadressfeld und dem umgeschriebenen Netzwerkadresserweiterungsfeld in ein vom aktuellen Netzwerk unterstütztes Nachrichtenformat und Weiterleiten einer Nachricht gemäß einer Weiterleitungstabelle der neuen Zieladresse.

2. Das auf On-Path-Readressierung basierende Routing- und Weiterleitungsverfahren nach Anspruch 1, wobei das Auflösungsdienstsystem eine oder mehrere Dienstebenen umfasst und ein verteiltes Abfragedienstsystem ist, das die Zuordnungsbeziehung zwischen der Kennung ID und einer entsprechenden Netzwerkadresse verwalten kann und Auflösungsdienste mehrerer Dienstebenen bereitstellen kann;
das Auflösungsdienstsystem ein auf Dienstebenen basierendes verteiltes System mit einer hierarchischen Struktur ist; jeder das verteilte System bildende verteilte Knoten eine oder mehrere Nachbarschaftsknotenlisten verwaltet und die Knoten in der einen oder den mehreren Nachbarschaftsknotenlisten gemeinsam auf dieselbe Auflösungsanfrage reagieren;
die Zuordnungsbeziehungen zwischen den Identifikationen aller Identifikatoren ID und den entsprechenden Netzwerkadressen werden im Auflösungsdienstsystem registriert und verwaltet; und
wobei das Auflösungsdienstsystem unter anderem eine Registrierungsdienstfunktion, eine Abrufdienstfunktion, eine Abfragedienstfunktion und eine Verwaltungsdienstfunktion umfasst.

3. Das auf On-Path-Readressierung basierende Routing- und Weiterleitungsverfahren nach Anspruch 1, wobei das auf dem Servicelevel basierende verteilte System mit einer hierarchischen Struktur eine einschichtige oder eine mehrschichtige Struktur aufweist;
Knoten auf derselben Ebene im verteilten System weisen dieselbe Dienstleistungsstufe auf, während Knoten auf unterschiedlichen Ebenen unterschiedliche Dienstleistungsstufen aufweisen;
ein für einen Nutzer auf einer bestimmten Dienstleistungsstufe verfügbarer Dienstknoten bedeutet, dass der Nutzer auf diesem Dienstknoten Auflösungs- und Abfragedienste entsprechend der der Dienstleistungsstufe entsprechenden Dienstleistungsleistung in Anspruch nehmen kann; und
ein Dienstknoten, der einen bestimmten Benutzer besitzt, bedeutet, dass der Dienstknoten dem Benutzer die Auflösungs- und Abfragedienste mit der dem Dienstleistungsniveau entsprechenden Dienstleistungsqualität bereitstellen kann.

4. Das auf On-Path-Readressierung basierende Routing- und Weiterleitungsverfahren nach Anspruch 1 oder 3, wobei in dem auf Dienstleistungsstufen basierenden verteilten System mit einer hierarchischen Struktur ein Benutzerknoten einen oder mehrere bedienbare Knoten besitzt, die derselben Dienstleistungsstufe angehören; falls mehrere bedienbare Knoten auf einer bestimmten Dienstleistungsstufe existieren, dann hat die Dienstleistungsstufe genau einen Dienstknoten als Masterknoten;
wobei alle Master-Knoten jeder Dienstleistungsstufe, die den Benutzer bedienen, einer verschachtelten Struktur entsprechen; alle Benutzer, die der Benutzer am Master-Knoten der Dienstleistungsstufe j besitzt, müssen auch die Benutzer sein, die der Benutzer am Master-Knoten auf Ebenen oberhalb der Dienstleistungsstufe j besitzt;
Angenommen, der Benutzer ist *uᵢ* , *ms_{i,j}* ist der für *uᵢ* auf der Dienststufe j ausgewählte Masterknoten, *Φ*(*ms_{i,j}*) ist eine vom Masterknoten *ms_{i,j}* bediente Benutzergruppe; wenn die Dienststufe k größer ist als die Dienststufe j, gilt *Φ*(*ms_{i,j}*) C *Φ*(*ms_{i,k}*), wobei der Master-Knoten durch eine Auswahlfunktion definiert oder zugewiesen wird.

5. Das auf On-Path-Readressierung basierende Routing- und Weiterleitungsverfahren nach Anspruch 1, wobei die Nachbarschaftsknotenliste eine lokal autonome Knotenliste ist, die vom Knoten selbst gepflegt wird, und der Knoten Dienstknoten in einem Teil des Netzwerks auf der Grundlage von Nachbarschaftsbeurteilungskriterien auswählt, um eine Nachbarschaftsknotenliste zu erstellen;
es können mehrere Nachbarschaftsknotenlisten erstellt werden, wenn mehrere Kriterien erfüllt sind;
wobei die Nachbarschaftsbeurteilungskriterien unter anderem Folgendes umfassen:
eine Nachbarschaft wird auf der Grundlage eines Kriteriums zur Messung der Netzwerkverzögerung hergestellt; wenn die Verzögerung zwischen einem Knoten und einem potenziellen Nachbarschaftsknoten unter einem bestimmten Schwellenwert liegt, wird der potenzielle Nachbarschaftsknoten zur Nachbarschaftsknotenliste hinzugefügt;
eine Nachbarschaft wird auf der Grundlage eines geografischen Entfernungskriteriums festgelegt; wenn die physische Entfernung zwischen einem Knoten und einem potenziellen Nachbarschaftsknoten kleiner als ein voreingestellter Entfernungsschwellenwert ist, wird der potenzielle Nachbarschaftsknoten zur Nachbarschaftsknotenliste hinzugefügt;
eine Nachbarschaft wird auf der Grundlage eines Kriteriums der semantischen Ähnlichkeit festgelegt: Wenn der Knoten in hohem Maße mit den im Kandidatenknoten der Nachbarschaft gespeicherten Inhalten assoziiert ist, wird der Kandidatenknoten der Nachbarschaft zur Liste der Nachbarschaftsknoten hinzugefügt; wobei sich die Korrelation auf die Ähnlichkeit der in zwei Knoten gespeicherten Inhalte durch semantische Berechnung bezieht; und
eine Nachbarschaft wird auf der Grundlage eines Kriteriums der strukturellen Beziehung gebildet: Wenn alle Dienstknoten eine baumartige Struktur bilden, bilden die Nachkommenknoten oder die Nachkommen der Nachkommenknoten in der baumartigen Struktur eine Nachbarschaft.

6. Das auf On-Path-Readressierung basierende Routing- und Weiterleitungsverfahren nach Anspruch 1, wobei die Knoten in einer oder mehreren Nachbarschaftsknotenlisten gemeinsam auf dieselbe Auflösungsanfrage reagieren; und Knoten in der von jedem Knoten verwalteten Nachbarschaftsknotenliste Dienste anstelle des Knotens selbst oder parallel zu diesem bereitstellen können;
wobei die Bedingungen für die Beurteilung ersetzbarer oder paralleler Dienste unter anderem Folgendes umfassen:
der Knoten selbst überlastet ist und es ihm schwerfällt, auf die Anfrage gemäß den Anforderungen des Servicelevels zu reagieren, und die Nachbar-Knoten mit derselben Dienstleistungsfähigkeit die Anfrage mit einem Dienst bedienen können, der die Anforderungen des Servicelevels erfüllt;
der Knoten selbst speichert den erforderlichen Inhalt nicht, und die zugehörigen benachbarten Knoten verfügen über den erforderlichen Inhalt und können den vom Nutzer geforderten Dienst auf dem geforderten Servicelevel bereitstellen; und
wenn eine hohe Anzahl gleichzeitiger Anfragen auftritt, können mehrere benachbarte Knoten die Dienstanforderungen gleichzeitig erfüllen und eine Umleitung der Anfragen vornehmen.

7. Das auf On-Path-Readressierung basierende Routing- und Weiterleitungsverfahren nach Anspruch 1, wobei die Informationen des Netzwerkadressenerweiterungsfeldes unter anderem Folgendes umfassen: Informationen zu mehreren Kandidaten-Speicheradressensätzen oder Referenzinformationen zu den Inhalten, die der Ziel-ID-Kennung entsprechen, Informationen zu mehreren Kandidaten-Netzwerkadressensätzen oder Referenzinformationen unter derselben Geräte-ID-Kennung sowie Informationen zur Verarbeitung auf der Netzwerkschicht; wobei die Referenzinformationen unter anderem Zeiger und Offsets umfassen.

## Revendications

1. Procédé de routage et de transfert basé sur la réadressage en cours de route, comprenant :
dans un réseau utilisant le Procédé de routage et de transfert basé sur le réadressage sur le chemin,
l'identification de chaque entité d'élément de réseau au moyen d'un identifiant ID unique et invariable, toutes les entités d'élément de réseau du réseau comprenant, sans s'y limiter, des hôtes, des dispositifs, des données et des services, et la relation de mise en correspondance entre l'identifiant ID de chaque entité d'élément de réseau et une adresse réseau correspondante étant gérée par un système de service de résolution basé sur le niveau de service;
le niveau de service faisant référence à un service différencié défini sur la base de mesures, et cette définition reposant sur la combinaison d'un niveau de service défini en fonction du délai de réponse issu de mesures du réseau et d'un niveau de service défini en fonction de la mesure de la distance géographique;
après qu'un dispositif de routage et de commutation réseau a reçu un message de données de la couche réseau, réécrire un champ d'adresse réseau et un champ d'extension d'adresse réseau du message; et former un message de transfert au moyen d'une reconstruction du message en fonction du champ d'adresse réseau et du champ d'extension d'adresse réseau réécrits du message, puis transférer le message de transfert sur la base d'une table de transfert, dans laquelle la table de transfert peut être calculée et gérée à l'aide d'une méthode de routage basée sur la localisation;
dans lequel le message de données est acheminé dans un format de message de couche réseau, et le message de données comprend : un champ d'adresse réseau, un champ d'extension d'adresse réseau, un champ d'identification (ID) qui reste inchangé pendant une session, et un champ de préférence qui contient les exigences de l'application pour la transmission; dans lequel le champ de préférence comprend : des paramètres spécifiques liés à l'application; les paramètres spécifiques liés à l'application comprennent, sans s'y limiter, les exigences de qualité de service et les préférences de l'application;
la réécriture du champ d'adresse réseau et du champ d'extension d'adresse réseau du message de données, ainsi que la reconstruction du message, le processus spécifique de réécriture du champ d'adresse réseau et du champ d'extension d'adresse réseau du message de données étant le suivant :
étape 1) demander au système de service de résolution un service de résolution conforme à l'exigence de niveau de service de réponse, en fonction de l'identifiant porté par le message de données; obtenir une nouvelle adresse de destination associée à cet identifiant, et réécrire le champ d'adresse réseau du message de données en utilisant la nouvelle adresse de destination afin d'obtenir un champ d'adresse réseau réécrit;
étape 2) obtenir un ensemble d'adresses candidates par le biais des informations relatives à cet ensemble ou de leurs informations de référence contenues dans le champ d'extension d'adresse réseau, en tenant compte de l'état du réseau perçu par le dispositif de routage et de commutation du réseau ainsi que des informations du champ d'extension d'adresse réseau contenues dans le message de données;
dans l'ensemble d'adresses candidates constitué des adresses interrogées auprès du système de service de résolution en fonction de l'identifiant ID, sélectionner une partie du sous-ensemble, réorganiser les adresses sélectionnées, choisir une adresse appropriée comme nouvelle adresse de destination selon des stratégies prédéfinies, insérer la nouvelle adresse de destination dans le champ d'adresse réseau du message de données, filtrer une partie du sous-ensemble sélectionné, et réécrire le contenu filtré à la position correspondante dans le champ d'extension d'adresse réseau; et
étape 3) calculer une partie des informations de champ dans le nouveau champ d'extension d'adresse réseau en fonction de l'état du réseau perçu par le dispositif de routage et de commutation du réseau, des informations du champ d'extension d'adresse réseau éventuellement contenues dans le message de données et de stratégies prédéfinies; puis, réécrire la partie correspondante du champ d'extension d'adresse réseau dans le message de données, et obtenir le champ d'extension d'adresse réseau réécrit;
dans lequel un processus spécifique de reconstruction du message est le suivant :
reconstruire le message comprenant le champ d'adresse réseau réécrit et le champ d'extension d'adresse réseau réécrit dans un format de message pris en charge par le réseau actuel, et acheminer le message conformément à une table d'acheminement de la nouvelle adresse de destination.

2. Procédé de routage et de transfert basé sur la réadressage en cours de route selon la revendication 1, dans lequel le système de service de résolution comprend un ou plusieurs niveaux de service, et est un système de service de requête distribué capable de maintenir la relation de mise en correspondance entre l'identifiant ID et une adresse réseau correspondante, et capable de fournir des services de résolution à plusieurs niveaux de service;
le système de service de résolution est un système distribué basé sur des niveaux de service et doté d'une structure hiérarchique; chaque nœud distribué constituant le système distribué gère une ou plusieurs listes de nœuds voisins, et les nœuds figurant dans la ou les listes de nœuds voisins répondent de manière coopérative à une même requête de résolution;
les relations de mise en correspondance entre les identifications de tous les identifiants ID et les adresses réseau correspondantes sont enregistrées et gérées dans le système de service de résolution; et
dans lequel le système de service de résolution comprend, sans s'y limiter, une fonctionnalité de service d'enregistrement, une fonctionnalité de service de récupération, une fonctionnalité de service d'interrogation et une fonctionnalité de service de gestion.

3. Procédé de routage et de transfert basé sur le réacheminement en cours de route selon la revendication 1, dans lequel le système distribué basé sur les niveaux de service et doté d'une structure hiérarchique présente une structure à un seul niveau ou une structure à plusieurs niveaux;
les nœuds situés au même niveau dans le système distribué ont le même niveau de service, tandis que les nœuds situés à des niveaux différents ont des niveaux de service différents;
un nœud de service d'un utilisateur situé à un certain niveau de service indique que l'utilisateur peut obtenir des services de résolution et d'interrogation sur ce nœud de service conformément aux performances de service correspondant à ce niveau de service; et
le fait qu'un nœud de service possède un utilisateur donné indique que ce nœud de service peut fournir à cet utilisateur les services de résolution et d'interrogation avec les performances de service correspondant au niveau de service.

4. Procédé de routage et de transfert basé sur la réadressage en cours de route selon la revendication 1 ou 3, dans lequel, dans le système distribué basé sur les niveaux de service et doté d'une structure hiérarchique, un nœud utilisateur possède un ou plusieurs nœuds de service appartenant au même niveau de service; s'il existe plusieurs nœuds de service à un certain niveau de service, alors ce niveau de service possède un et un seul nœud de service en tant que nœud maître;
dans laquelle tous les nœuds maîtres de chaque niveau de service desservant l'utilisateur se conforment à une structure imbriquée; tous les utilisateurs gérés par l'utilisateur au niveau du nœud maître du niveau de service j doivent également être les utilisateurs gérés par l'utilisateur au niveau du nœud maître des niveaux supérieurs au niveau de service j;
supposons que l'utilisateur soit *uᵢ* , *ms_{i,j}* soit le nœud maître sélectionné pour*uᵢ* au niveau de service j, que *Φ*(*ms_{i,j}*) soit un ensemble d'utilisateurs desservi *ms_{i,j}* du nœud maître; lorsque le niveau de service k est supérieur au niveau de service j, *Φ*(*ms_{i,j}*) C *Φ*(*ms_{i,k}*) le nœud maître étant défini ou attribué par une fonction de sélection.

5. Procédé de routage et de transfert basé sur la réadressage sur le chemin selon la revendication 1, dans lequel la liste des nœuds de voisinage est une liste de nœuds localement autonome gérée par le nœud lui-même, et le nœud sélectionne des nœuds de service dans une partie du réseau sur la base de critères d'évaluation de voisinage afin de construire une liste de nœuds de voisinage;
plusieurs listes de nœuds de voisinage peuvent être établies si plusieurs critères sont remplis;
dans lequel les critères d'évaluation de voisinage comprennent, sans s'y limiter :
un voisinage est établi sur la base d'un critère de mesure du délai réseau; si le délai entre un nœud et un nœud de voisinage candidat est inférieur à un certain seuil, alors le nœud de voisinage candidat est ajouté à la liste des nœuds de voisinage;
un voisinage est établi sur la base d'un critère de distance géographique; si la distance physique entre un nœud et un nœud de voisinage candidat est inférieure à un seuil de distance prédéfini, le nœud de voisinage candidat est ajouté à la liste des nœuds de voisinage;
un voisinage est établi sur la base d'un critère de similarité sémantique : si le nœud présente une forte association avec le contenu stocké dans le nœud de voisinage candidat, alors ce dernier est ajouté à la liste des nœuds de voisinage; la corrélation désignant ici la similarité des contenus stockés dans deux nœuds, déterminée par un calcul sémantique; et
un voisinage est établi sur la base d'un critère de relation structurelle : si tous les nœuds de service constituent une structure arborescente, alors les nœuds descendants ou les nœuds descendants des descendants dans la structure arborescente constituent un voisinage.

6. Procédé de routage et de transfert basé sur le réadressage en cours de route selon la revendication 1, dans lequel les nœuds figurant dans une ou plusieurs listes de nœuds de voisinage répondent de manière coopérative à la même demande de résolution; et les nœuds figurant dans la liste de nœuds de voisinage gérée par chaque nœud peuvent fournir des services à la place du nœud lui-même ou en parallèle avec celui-ci;
dans laquelle les conditions permettant de déterminer si des services peuvent être fournis à la place ou en parallèle comprennent, sans s'y limiter :
le nœud lui-même est surchargé et a des difficultés à répondre à la requête conformément aux exigences du niveau de service, et les nœuds du voisinage disposant de la même capacité de service peuvent répondre à la requête avec un service répondant aux exigences de niveau;
le nœud lui-même ne stocke pas le contenu requis, et les nœuds voisins concernés disposent du contenu requis et peuvent fournir le service au niveau de service exigé par l'utilisateur; et
lorsqu'un nombre élevé de requêtes simultanées se produit, plusieurs nœuds voisins peuvent satisfaire simultanément aux exigences de service et effectuer un détournement des requêtes.

7. Procédé de routage et de transfert basé sur la réadressage en cours de route selon la revendication 1, dans lequel les informations du champ d'extension d'adresse réseau comprennent, sans s'y limiter : des informations relatives à un ensemble d'adresses de stockage candidates ou des informations de référence du contenu correspondant à l'identifiant de destination, des informations relatives à un ensemble d'adresses réseau candidates ou des informations de référence sous le même identifiant de périphérique, et des informations d'indication de traitement de la couche réseau; dans lequel les informations de référence comprennent, sans s'y limiter, des pointeurs et des décalages.
